(19) Europäisches Patentamt
European Patent Office
Office européen des brevets

(11) EP 4 293 853 A1

(12) **EUROPEAN PATENT APPLICATION**
published in accordance with Art. 153(4) EPC

(43) Date of publication:
**20.12.2023 Bulletin 2023/51**

(21) Application number: **22883746.4**

(22) Date of filing: **22.08.2022**

(51) International Patent Classification (IPC):
***H02J 3/32*** *(2006.01)*

(52) Cooperative Patent Classification (CPC):
**H02J 3/32;** Y02E 10/56; Y02E 70/30

(86) International application number:
**PCT/KR2022/012470**

(87) International publication number:
**WO 2023/068519 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.10.2021 KR 20210140844**

(71) Applicant: **LG Energy Solution, Ltd.**
**Seoul 07335 (KR)**

(72) Inventor: **CHOI, Jinyoung**
**Daejeon 34122 (KR)**

(74) Representative: **Plasseraud IP**
**66, rue de la Chaussée d'Antin**
**75440 Paris Cedex 09 (FR)**

# (54) ENERGY STORAGE SYSTEM COMPRISING BATTERY RACK AND SOLAR MODULE, AND METHOD FOR OPERATING ENERGY STORAGE SYSTEM

(57) An energy storage system connected with at least one photovoltaic module and a power grid and including a plurality of battery racks may comprise a DC/DC converter configured to control charging and discharging of the plurality of battery racks; a DC (direct current) connector configured to connect the photovoltaic module and the DC/DC converter; a power conversion system configured to receive an output of the DC connector as input and convert the output of the DC connector into AC (alternating current) power; and a controller configured to monitor states of the plurality of battery racks, the DC/DC converter, the photovoltaic module, and the power conversion system, compare a DC voltage of the photovoltaic module and a DC voltage of the power conversion system, and control operations of the power conversion system and the DC/DC converter according to a result of comparison.

[Figure 1]

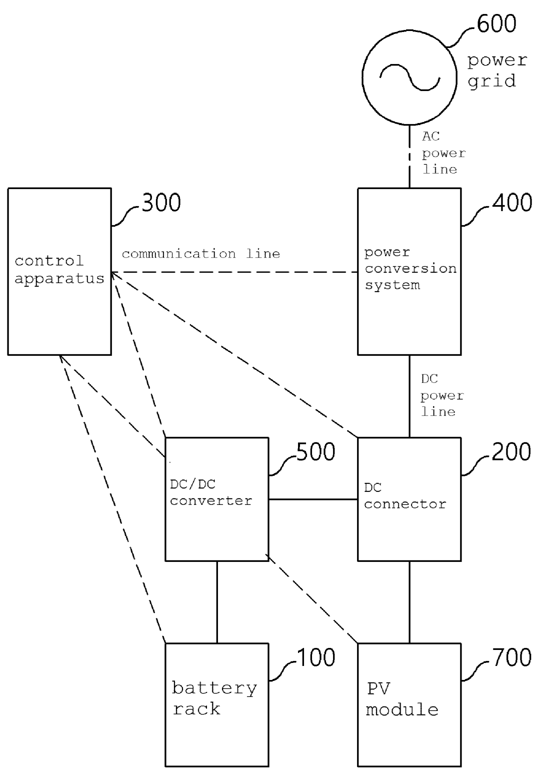


EP 4 293 853 A1

## Description

[Technical Field]

This application claims priority to and the benefit of Korean Patent Application No.10-2021-0140844 filed in the Korean Intellectual Property Office on October 21, 2021, the entire contents of which are incorporated herein by reference.

The present invention relates to an energy storage system and an operating method thereof, and more particularly, to an energy storage system including battery racks and photovoltaic modules, an operating method thereof, and an apparatus for controlling operations of an energy storage system.

[Background Art]

An energy storage system relates to renewable energy, a battery that stores electric power, and a power grid. Recently, as a spread of smart grid and renewable energy is expanding and the efficiency and the stability of the power system are emphasized, a demand for energy storage systems for power supply and demand control and power quality improvement is increasing.Depending on a purpose of use, energy storage systems may have different output and capacity. In order to configure a large-capacity energy storage system, a plurality of battery systems may be connected.

In relation to this, instead of AC-coupled photovoltaic power generation and battery systems, which have been widely used in the past, researches on DC-coupled systems are being actively conducted to reduce initial installation costs and increase efficiency.

Somehow, in a conventional solar photovoltaic system, a unidirectional power converter that receives direct current output from a photovoltaic module and generates power into the power grid is used. Therefore, in a DC-coupled system in which photovoltaic modules and a battery system are connected by direct current, the photovoltaic modules can generate electricity in one direction only but a battery can charge and discharge in both directions, and thus, a collision may occur during their operations. In addition, since operating range conditions and operable time periods of the photovoltaic modules and the battery are different, a proper operation plan that can maximize power generation efficiency in this type of energy storage system is required.

[Detailed Description of the Invention]

[Technical Problem]

In order to achieve the objective of the present disclosure, embodiments of the present disclosure provide an energy storage system connected with photovoltaic modules and a power grid and including a plurality of battery racks.

In order to achieve the objective of the present disclosure, embodiments of the present disclosure provide an operating method of an energy storage system connected with photovoltaic modules and a power grid and including a plurality of battery racks.

In order to achieve the objective of the present disclosure, embodiments of the present disclosure provide an apparatus for controlling operations of an energy storage system connected with photovoltaic modules and a power grid and including a plurality of battery racks.

[Technical Solution]

In order to achieve the objective of the present disclosure, an energy storage system connected with photovoltaic modules and a power grid and including a plurality of battery racks may comprise a DC/DC converter configured to control charging and discharging of the plurality of battery racks; a DC (direct current) connector configured to connect the photovoltaic modules and the DC/DC converter; a power conversion system configured to receive an output of the DC connector as input and convert the output of the DC connector into AC (alternating current) power; and a controller configured to monitor states of the plurality of battery racks, the DC/DC converter, the photovoltaic modules, and the power conversion system, compare a DC voltage of the photovoltaic modules and a DC voltage of the power conversion system, and control operations of the power conversion system and the DC/DC converter according to a result of comparison.

In the embodiment, the controller may further be configured, upon the DC voltage of the photovoltaic modules being less than a starting DC voltage of the power conversion system, to control the DC/DC converter to perform charging for the plurality of battery racks.

In addition, the controller may further be configured, upon the DC voltage of the photovoltaic modules being higher than or equal to the DC voltage of the power conversion system, to control the power conversion system to start generating power and to control the DC/DC converter to perform charging and discharging according to an operating time period.

Somehow, the controller may further be configured, upon a state of charge of the battery racks being within a certain range during a discharge time period, to control the power conversion system to perform power generation using maximum power point tracking control of the photovoltaic modules and to control the DC/DC converter to discharge so as to maintain the output of the power conversion system as the maximum output value.

In addition, the controller may further be configured, upon a state of charge of the battery racks being within a certain range during a charge time period, to control the power conversion system to generate power based on an output value according to maximum power point tracking control of the photovoltaic modules and a charge amount of the DC/DC converter and to control the DC/DC converter to perform charging with a constant value.

According to another embodiment of the present disclosure, an operating method of an energy storage system, connected with photovoltaic modules and a power grid and including a plurality of battery racks, may comprise: monitoring states of the plurality of battery racks, a DC/DC converter configured to control charging and discharging of the plurality of battery racks, the photovoltaic modules, and a power conversion system configured to receive an output of a DC (direct current) connector as an input and convert the output of the DC connector into AC (alternating current) power; comparing a DC voltage of the photovoltaic modules and a DC voltage of the power conversion system; and controlling operations of the power conversion system and the DC/DC converter according to a result of comparison.

The controlling operations of the power conversion system and the DC/DC converter may include, upon the DC voltage of the photovoltaic modules being less than a starting DC voltage of the power conversion system, controlling the DC/DC converter to perform charging for the plurality of battery racks.

The controlling operations of the power conversion system and the DC/DC converter may include, upon the DC voltage of the photovoltaic modules being higher than or equal to the DC voltage of the power conversion system, controlling the power conversion system to start generating power and controlling the DC/DC converter to perform charging and discharging according to an operating time period.

The controlling operations of the power conversion system and the DC/DC converter may include, upon a state of charge of the battery racks being within a certain range during a discharge time period, controlling the power conversion system to perform power generation using maximum power point tracking control of the photovoltaic modules and controlling the DC/DC converter to discharge so as to maintain the output of the power conversion system as the maximum output value.

The controlling operations of the power conversion system and the DC/DC converter may include, upon a state of charge of the battery racks being within a certain range during a charge time period, controlling the power conversion system to generate power based on an output value according to maximum power point tracking control of the photovoltaic modules and a charge amount of the DC/DC converter and controlling the DC/DC converter to perform charging with a constant value.

According to another embodiment of the present disclosure, an apparatus for controlling operations of an energy storage system, connected with photovoltaic modules and a power grid and including a plurality of battery racks, may comprise at least one processor; a memory configured to store at least one instruction executed by the at least one processor, and a transceiver for communicating with other components in the energy storage system.

The at least one instruction includes: an instruction to monitor states of the plurality of battery racks, a DC/DC converter configured to control charging and discharging of the plurality of battery racks, the photovoltaic modules, and a power conversion system configured to receive an output of a DC (direct current) connector as an input and convert the output of the DC connector into AC (alternating current) power; an instruction to compare a DC voltage of the photovoltaic modules and a DC voltage of the power conversion system; and an instruction to control operations of the power conversion system and the DC/DC converter according to a result of comparison.

In the embodiment, the instruction to control operations of the power conversion system and the DC/DC converter may include, upon the DC voltage of the photovoltaic modules being less than the starting DC voltage of the power conversion system, an instruction to control the DC/DC converter to perform charging for the battery rack.

In addition, the instruction to control operations of the power conversion system and the DC/DC converter may include, upon the DC voltage of the photovoltaic modules being higher than or equal to the DC voltage of the power conversion system, an instruction to control the power conversion system to start generating power; and an instruction to control the DC/DC converter to perform charging and discharging according to an operating time period.

Somehow, the instruction to control operations of the power conversion system and the DC/DC converter may include: upon a state of charge of the battery racks being within a certain range during a discharge time period, an instruction to control the power conversion system to perform power generation using maximum power point tracking control of the photovoltaic modules; and an instruction to control the DC/DC converter to discharge so as to maintain the output of the power conversion system as the maximum output value.

In addition, the instruction to control operations of the power conversion system and the DC/DC converter may include: upon a state of charge of the battery racks being within a certain range during a charge time period, an instruction to control the power conversion system to generate power based on an output value according to maximum power point tracking control of the photovoltaic modules and a charge amount of the DC/DC converter; and an instruction to control the DC/DC converter to perform charging with a constant value.

[Advantageous Effects]

According to the embodiment of the present disclosure, installation costs can be reduced and power generation efficiency can be increased in a DC-coupled energy storage system including a plurality of battery racks and photovoltaic modules.

[Brief Description of the Drawings]

FIG. 1 is a block diagram of a DC-coupled energy storage system to which the present invention may be applied.

FIG. 2 shows a sequence of operating method in an energy storage system according to embodiments of the present invention.

FIG. 3 is a conceptual diagram schematically illustrating an operating method of an energy storage system according to embodiments of the present invention.

FIG. 4 is a block diagram of an apparatus for controlling operations of an energy storage system according to embodiments of the present invention.

[Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

State of Charge (SOC) refers to a current state of charge of a battery, represented in percent points [%], and State of Health (SOH) may be a current condition of a battery compared to its ideal or original conditions, represented in percent points [%].

A battery rack refers to a system of a minimum single structure assembled by connecting module units in series/parallel, module units being set by a battery manufacturer. A battery rack can be monitored and controlled by a battery management system (BMS). A battery rack may include several battery modules and a battery protection unit or any other protection device.

A battery bank refers to a group of large-scale battery rack systems configured by connecting several racks in parallel. A bank BMS for a battery bank may monitor and control several rack BMSs, each of which manages a battery rack.

A battery section controller (BSC) refers to a device that controls the topmost level of a battery system including a battery bank level structure or a multiple bank level structure. A battery section controller may also be referred to a battery system controller.

A power limit refers to a limit of power that can be output from a battery, which is set in advance by a battery manufacturer based on a battery condition. A rack power limit may mean an output power limit ([kW]) set for a rack level, and can be set based on a SOC and a temperature of the battery.

The power limit can be a charge power limit or a discharge power limit depending on whether charging or discharging is applied. In addition, according to a battery system structure, a rack power limit or a bank power limit may be defined.

Hereinafter, exemplary embodiments of the present invention will be described in detail with reference to the accompanying drawings.

FIG. 1 is a block diagram of a DC-coupled energy storage system to which the present invention may be applied.

Referring to FIG. 1, in an energy storage system (ESS), a battery is used for storing energy or power. Typically, multiple battery modules may form a battery rack and multiple battery racks may form a battery bank. Here, depending on a device or a system in which the battery is used, a battery rack may be referred to as a battery pack. The battery shown in FIG. 1 may be in a form of a bidirectional battery pack or battery rack in which a plurality of batteries (battery #1, battery #2, ... , battery #N) are connected in series and parallel.

Here, a battery management system (BMS) (not shown) may be installed for each battery. The BMS may monitor a current, a voltage and a temperature of each battery rack (or pack) to be managed, calculate a state of charge (SOC) of the battery based on monitoring results to control charging and discharging.

A DC-coupled energy storage system may include a DC/DC converter 500 for controlling charging and discharging of the battery rack by individually controlling the DC voltage/current in each battery system. The DC/DC converter may be a bidirectional converter, but however, various types of converters such as a full-bridge converter, a half-bridge converter, and a flyback converter may also be used.

Since the DC/DC converter is placed in the battery system in a DC-coupled energy storage system, a DC/AC converter that used to be located in the system for connecting with the photovoltaics is no longer needed and the system efficiency may be increased. In addition, by applying a DC/DC converter to each battery system, it performs not only existing protection control of the battery system, but also power control of battery racks based on characteristics of individual battery systems even when there is a difference in a SOC, a SOH (State of Health), or a capacity among battery racks.

A battery section controller (BSC) (not shown) may be located in each battery section which includes a plurality of batteries, peripheral circuits, and devices to monitor and control objects such as a voltage, a current, a temperature, and a circuit breaker.

The battery section controller may report state information of each battery to the control apparatus 300. Here, the state information of each battery may include information such as a state of charge (SOC), a state of health (SOH), a voltage, and a temperature of each battery. The battery section controller may provide information such as a power limit and actual power of each battery to the control apparatus 300. The control apparatus 300 in charge of controlling the entire energy storage system may transmit a charge or discharge command to the power conversion system 400 during actual system operation.

A power conversion system (PCS) 400 installed in each battery section controls power supplied from the outside and power supplied from the battery section to the outside and may include a DC/AC inverter. In addition, the output of the DC/DC converter 500 may be connected to the power conversion system 400 and the power conversion system 400 may be connected to a power grid 600.

The control apparatus 300 connected to the power conversion system may control output of the power conversion system based on monitoring and control results of the BMS or BSC. Here, the control apparatus 300 may be a power management system (PMS) or an energy management system (EMS).

Meanwhile, the photovoltaic module 700 may include a plurality of unidirectional photovoltaic modules that are connected in series and parallel to generate power. The output terminal of the photovoltaic module 700 may be connected to the DC/DC converter 500 and the power conversion system 400 through the DC connector 200, thereby configuring a DC-coupled energy storage system. The DC (direct current) connector 200 is a device for connecting the photovoltaic module 700, the power conversion system 400, and the DC/DC converter 500, and may include a reverse current prevention device that prevents reverse current from flowing to the photovoltaic module.

The control apparatus 300 may receive state information of the battery rack 100, the photovoltaic module 700, the power conversion system 400, and the DC/DC converter 500, determine connection states of the components in the system, and determine an output of the power conversion system and an output of the DC/DC converter according to operating range conditions and an operating time zone.

Here, CAN (Controller Area Network) or Ethernet may be used for communication (indicated by a dotted line in FIG. 1) between the control apparatus 300 and the power conversion system 400.

FIG. 2 shows a sequence of an operating method in an energy storage system according to embodiments of the present invention.

The operating method of the energy storage system according to the present invention may be performed by a control apparatus located in the energy storage system. The control apparatus according to embodiments of the present invention may be a power management system (PMS) or an energy management system (EMS), but the scope of the present invention is not limited to these entities.

The control apparatus receives state information of a plurality of photovoltaic modules, a plurality of battery racks, a DC/DC converter and a power conversion system (S210).

It is determined whether a DC voltage value ($V_{PV}$) of the photovoltaic module among the received state information is equal to or greater than a starting DC voltage value ($V_{inv_start}$) of the power conversion system (S220). In the instance that the DC voltage value ($V_{PV}$) of the photovoltaic module is less than the starting DC voltage ($V_{inv_start}$) of the power conversion system (No in S220), the DC voltage of the photovoltaic module is compared with a starting DC voltage of the DC/DC converter and the starting DC voltage of the power conversion system (S230).

In the instance that the DC voltage of the photovoltaic module is greater than or equal to the starting DC voltage ($V_{DCDC_start}$) of the DC/DC converter and less than the starting DC voltage of the power conversion system (Yes in S230), the power conversion system is stopped and charging for DC/DC converter is performed (S232). When the DC voltage output from the photovoltaic module is less than the starting DC voltage of the DC/DC converter, the entire ESS system is stopped (S231).

Returning back to step 220, when the DC voltage value ($V_{PV}$) of the photovoltaic module is greater than or equal to the starting DC voltage ($V_{inv_start}$) of the power conversion system (Yes in S220), the power conversion system starts power generating operation (S251, S252, S253). The control apparatus may determine which operation the DC/DC converter should perform while the power conversion system is generating power. Specifically, the control apparatus may compare a SOC value of the battery rack with the upper limit ($SOC_{Lim_up}$) as to SOC of the battery rack and the lower limit ($SOC_{Lim_dn}$) as to SOC of the battery rack (S240). Here, the State of Charge (SOC) represents a current charge rate of the battery rack in percentage [%].

If the SOC value of the battery rack is between the upper limit and the lower limit, the DC/DC converter is discharged if the operating time is in a discharge time zone (S252). On the other hand, if the operating time is in a charge time zone, the DC/DC converter is charged (S251). If the SOC of the battery rack is not between the upper limit and the lower limit (No in S240), the DC/DC converter stops its operation (S253). Even when the DC/DC converter is stopped, the power conversion system is still generating power.

FIG.3 is a conceptual diagram schematically illustrating an operating method of an energy storage system according to embodiments of the present invention.

The horizontal axis in FIG.3 represents an operation or driving time (t) of the system, and the vertical axis represents power (p). One of the two curves of FIG. 3 represents an output power according to maximum power point tracking (MPPT) control of the photovoltaic modules, and the other represents generated power from the power conversion system.

Looking from the leftmost side of the time axis in the graph of FIG. 3, the first area E is an area in which neither the power conversion system nor the DC/DC converter operates.

Area A, following area E, represents a case in which the DC voltage ($V_{PV}$) of the photovoltaic module is lower than the starting DC voltage ($V_{inv_start}$) of the power conversion system. In this instance, the power conversion system is in a stopped state, and the DC/DC converter charges the battery rack through charge control. Here, the charge amount of the DC/DC converter may be represented as in Equation 1 below.

[Equation 1]

$$P_{DCDC} = P_{PV_MPPT}$$

In Equation 1, $P_{DCDC}$ represents a charge amount of the DC/DC converter, and $P_{PV_MPPT}$ represents output power according to maximum power point tracking control of the photovoltaic modules.

Here, the Maximum Power Point Tracking (MPPT) control is a form of control that allows to obtain the maximum power by appropriately adjusting a load according to external situations. A point at which the maximum power is transmitted is referred to as the maximum power point, and the maximum power point may be changed according to external conditions such as solar radiation and temperatures.

Thereafter, in area B in which the DC voltage of the photovoltaic modules becomes greater than the starting DC voltage ($V_{inv_start}$) of the power conversion system, the power conversion system starts generating power, and the DC/DC converter is charged with a constant value during a charge time period. Here, the amount of power generated by the power conversion system may be represented as in Equation 2 below.

[Equation 2]

$$P_{inv} = P_{PV_MPPT} - P_{DCDC}$$

In Equation 2, $P_{inv}$ represents an amount of power generated by the power conversion system, $P_{PV_MPPT}$ represents an output power value according to the maximum power point tracking control of the photovoltaic modules, and $P_{DCDC}$ represents a charge amount of the DC/DC converter.

Thereafter, when the state of charge of the battery rack is located between the upper and lower limits during a discharge time period (area C) of the battery, the power conversion system generates power up to the maximum output point of the photovoltaic module, and the DC/DC converter additionally discharges to maintain the maximum output value of the power conversion system. Here, the amount of power generation of the power conversion system may be indicated as in Equation 3 below. Furthermore, the discharge amount of the DC/DC converter may be represented as Equation 4 below.

[Equation 3]

$$P_{inv} = P_{PV_MPPT}$$

[Equation 4]

$$P_{DCDC} = P_{inv_\max} - P_{inv}$$

In Equations 3 and 4, $P_{inv}$ indicates the amount of power generation of the power conversion system, $P_{PV_MPPT}$ indicates an output value according to maximum power point tracking control of the photovoltaic modules, $P_{DCDC}$ indicates a discharge amount of the DC/DC converter, and $P_{inv_max}$ indicates the maximum output value of the power conversion system.

In area D, the output of the power conversion system and the output of the photovoltaic modules are the same, and thus, the DC/DC converter stops its operation. Thereafter, the same operations described above may be performed as in the area named same in following sections of area C, area B, area A, and area E, respectively.

FIG. 4 is a block diagram of an apparatus for controlling operations of an energy storage system according to embodiments of the present invention.

The apparatus for controlling operation of an energy storage system according to embodiments of the present invention is an operation control apparatus of an energy storage system that is connected with at least one photovoltaic module and a power grid and includes a plurality of battery racks. The apparatus for controlling operation of an energy storage system may include at least one processor 310, a memory 320 for storing at least one instruction executed by the processor, and a transceiver 330 for communicating with other components in the energy storage system.

The at least one instruction may include an instruction to monitor states of the plurality of battery racks, the DC/DC converter configured to control charging and discharging of the plurality of battery racks, the photovoltaic modules, and the power conversion system configured to receive an output of the DC link as an input and convert the output of the DC link into AC power; an instruction to compare a DC voltage of the photovoltaic modules and a DC voltage of the power conversion system; and an instruction to control operations of the power conversion system and the DC/DC converter according to the result of comparison.

In the embodiment, the instruction to control operations of the power conversion system and the DC/DC converter may include, upon the DC voltage of the photovoltaic modules being less than the starting DC voltage of the power conversion system, an instruction to control the DC/DC converter to perform charging for the battery rack.

In addition, the instruction to control operations of the power conversion system and the DC/DC converter may include, upon the DC voltage of the photovoltaic modules being higher than or equal to the DC voltage of the power conversion system, an instruction to control the power conversion system to start generating power; and an instruction to control the DC/DC converter to perform charging and discharging according to an operating time period.

Somehow, the instruction to control operations of the power conversion system and the DC/DC converter may include: upon a state of charge of the battery racks being within a certain range during a discharge time period, an instruction to control the power conversion system to perform power generation using maximum power point tracking control of the photovoltaic modules; and an instruction to control the DC/DC converter to discharge so as to maintain the output of the power conversion system as the maximum output value.

In addition, the instruction to control operations of the power conversion system and the DC/DC converter may include: upon a state of charge of the battery racks being within a certain range during a charge time period, an instruction to control the power conversion system to generate power based on an output value according to maximum power point tracking control of the photovoltaic modules and a charge amount of the DC/DC converter; and an instruction to control the DC/DC converter to perform charging with a constant value.

The apparatus 300 for controlling operations of the energy storage system may further include an input interface 340, an output interface 350, a storage device 360, and the like. Components included in the apparatus 300 may be connected by a bus 370 to communicate with each other.

The processor 310 may execute a program instruction stored in at least one of the memory 320 and the storage device 360. Here, the processor may include a central processing unit (CPU), a graphics processing unit (GPU), or a dedicated processor on which a method according to embodiments of the present invention are performed. The memory (or storage device) may be configured as at least one of a volatile storage medium and a non-volatile storage medium. For example, the memory may be configured as at least one of a read only memory (ROM) and a random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An energy storage system connected with at least one photovoltaic module and a power grid and including a plurality of battery racks, the system comprising:

   a DC/DC converter configured to control charging and discharging of the plurality of battery racks;
   a DC (direct current) connector configured to connect the photovoltaic module and the DC/DC converter;
   a power conversion system configured to receive an output of the DC connector as input and convert the output of the DC connector into AC (alternating current) power; and
   a controller configured to monitor states of the plurality of battery racks, the DC/DC converter, the photovoltaic module, and the power conversion system, compare a DC voltage of the photovoltaic module and a DC voltage of the power conversion system, and control operations of the power conversion system and the DC/DC converter according to a result of comparison.

2. The energy storage system of claim 1, wherein the controller is configured, upon the DC voltage of the photovoltaic module being less than a starting DC voltage of the power conversion system, to control the DC/DC converter to perform charging for the plurality of battery racks.

3. The energy storage system of claim 1, wherein the controller is configured, upon the DC voltage of the photovoltaic module being higher than or equal to the DC voltage of the power conversion system, to control the power conversion system to start generating power and to control the DC/DC converter to perform charging and discharging according to an operating time period.

4. The energy storage system of claim 3, wherein the controller is configured, upon a state of charge of the battery racks being within a certain range during a discharge time period, to control the power conversion system to perform power generation using maximum power point tracking control of the photovoltaic module and to control the DC/DC converter to discharge so as to maintain the output of the power conversion system as the maximum output value.

5. The energy storage system of claim 3, wherein the controller is configured, upon a state of charge of the battery racks being within a certain range during a charge time period, to control the power conversion system to generate power based on an output value according to maximum power point tracking control of the photovoltaic module and a charge amount of the DC/DC converter and to control the DC/DC converter to perform charging with a constant value.

6. An operating method of an energy storage system connected with at least one photovoltaic module and a power grid and including a plurality of battery racks, the method comprising:

   monitoring states of the plurality of battery racks, a DC/DC converter configured to control charging and discharging of the plurality of battery racks, the photovoltaic module, and a power conversion system configured to receive an output of a DC (direct current) connector as an input and convert the output of the DC connector into AC (alternating current) power;
   comparing a DC voltage of the photovoltaic module and a DC voltage of the power conversion system; and
   controlling operations of the power conversion system and the DC/DC converter according to a result of comparison.

7. The operating method of claim 6, wherein the controlling operations of the power conversion system and the DC/DC converter includes, upon the DC voltage of the photovoltaic module being less than a starting DC voltage of the power conversion system, controlling the DC/DC converter to perform charging for the plurality of battery racks.

8. The operating method of claim 6, wherein the controlling operations of the power conversion system and the DC/DC converter includes, upon the DC voltage of the photovoltaic module being higher than or equal to the DC voltage of the power conversion system, controlling the power conversion system to start generating power and controlling the DC/DC converter to perform charging and discharging according to an operating time period.

9. The operating method of claim 8, wherein the controlling operations of the power conversion system and the DC/DC converter includes, upon a state of charge of the battery racks being within a certain range during a discharge time period, controlling the power conversion system to perform power generation using maximum power point tracking control of the photovoltaic module and controlling the DC/DC converter to discharge so as to maintain the output of the power conversion system as the maximum output value.

**10.** The operating method of claim 8, wherein the controlling operations of the power conversion system and the DC/DC converter includes, upon a state of charge of the battery racks being within a certain range during a charge time period, controlling the power conversion system to generate power based on an output value according to maximum power point tracking control of the photovoltaic module and a charge amount of the DC/DC converter and controlling the DC/DC converter to perform charging with a constant value.

**11.** An apparatus for controlling operations of an energy storage system connected with at least one photovoltaic module and a power grid and including a plurality of battery racks, the apparatus comprising:

at least one processor; and
a memory configured to store at least one instruction executed by the at least one processor, wherein the at least one instruction includes:

an instruction to monitor states of the plurality of battery racks, a DC/DC converter configured to control charging and discharging of the plurality of battery racks, the photovoltaic module, and a power conversion system configured to receive an output of a DC (direct current) connector as an input and convert the output of the DC connector into AC (alternating current) power;
an instruction to compare a DC voltage of the photovoltaic module and a DC voltage of the power conversion system; and
an instruction to control operations of the power conversion system and the DC/DC converter according to a result of comparison.

**12.** The apparatus of claim 11, wherein the instruction to control operations of the power conversion system and the DC/DC converter includes:

upon the DC voltage of the photovoltaic module being less than the starting DC voltage of the power conversion system,
an instruction to control the DC/DC converter to perform charging for the battery rack.

**13.** The apparatus of claim 11, wherein the instruction to control operations of the power conversion system and the DC/DC converter includes:

upon the DC voltage of the photovoltaic module being higher than or equal to the DC voltage of the power conversion system,
an instruction to control the power conversion system to start generating power; and
an instruction to control the DC/DC converter to perform charging and discharging according to an operating time period.

**14.** The apparatus of claim 13, wherein the instruction to control operations of the power conversion system and the DC/DC converter includes:

upon a state of charge of the battery racks being within a certain range during a discharge time period,
an instruction to control the power conversion system to perform power generation using maximum power point tracking control of the photovoltaic module; and
an instruction to control the DC/DC converter to discharge so as to maintain the output of the power conversion system as the maximum output value.

**15.** The apparatus of claim 13, wherein the instruction to control operations of the power conversion system and the DC/DC converter includes:

upon a state of charge of the battery racks being within a certain range during a charge time period,
an instruction to control the power conversion system to generate power based on an output value according to maximum power point tracking control of the photovoltaic module and a charge amount of the DC/DC converter; and
an instruction to control the DC/DC converter to perform charging with a constant value.

[Figure 1]

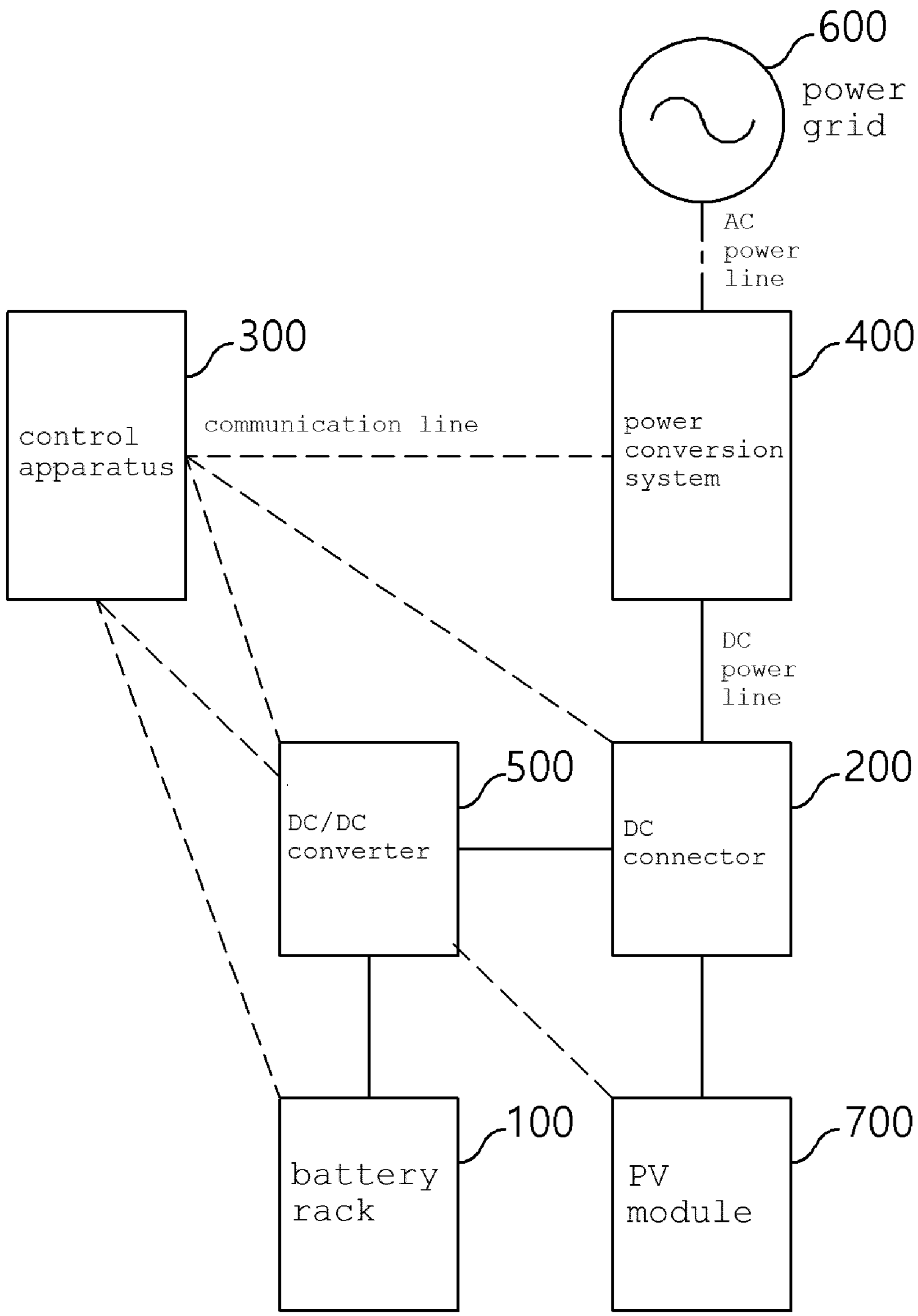
600
power grid
AC power line
300
control apparatus
communication line
400
power conversion system
DC power line
500
DC/DC converter
200
DC connector
100
battery rack
700
PV module

[Figure 2]

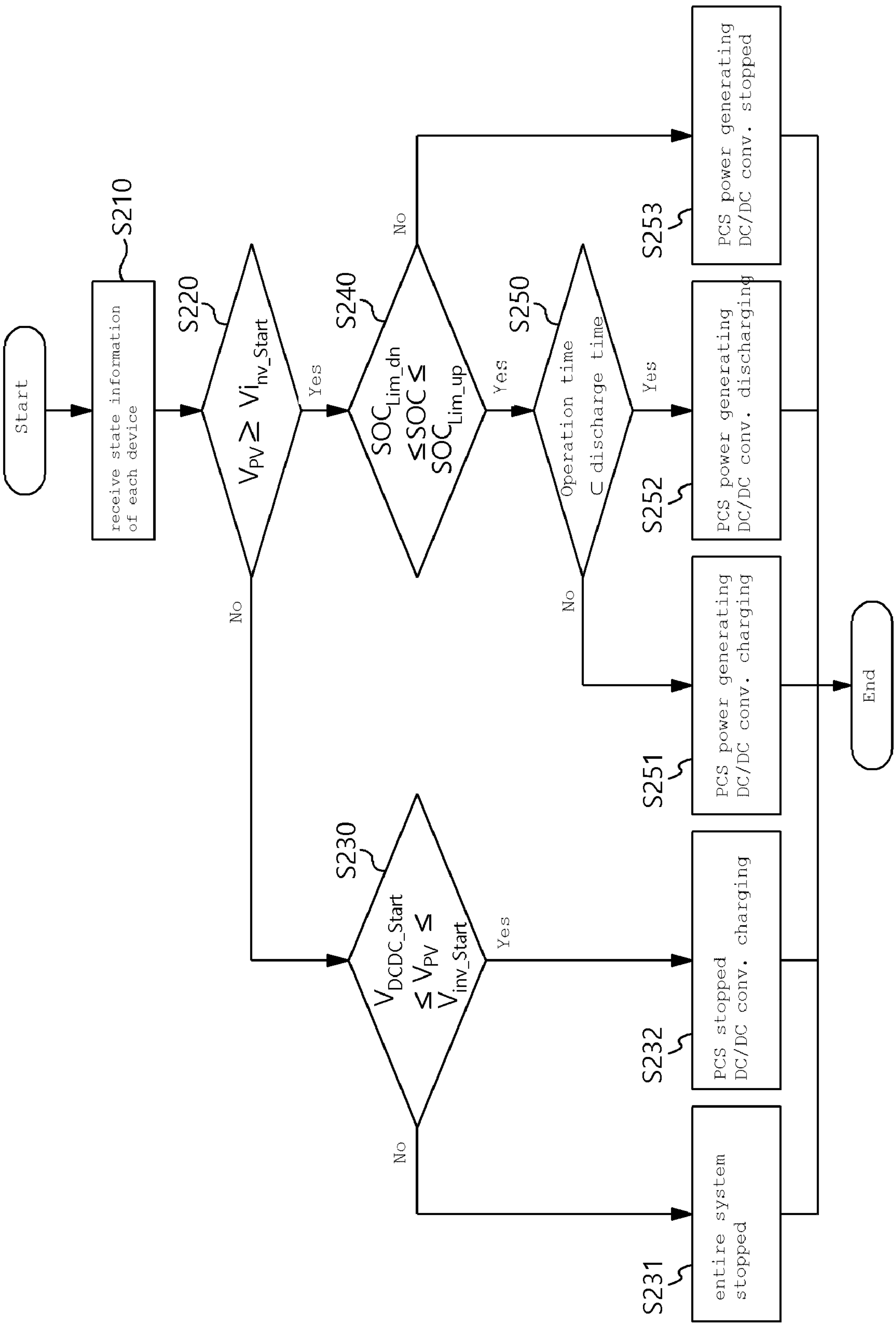
Start
receive state information of each device
S210
S220
$V_{PV} \geq Vi_{nv_Start}$
Yes
No
S240
$SOC_{Lim_dn} \leq SOC \leq SOC_{Lim_up}$
Yes
No
S250
Operation time ⊂ discharge time
Yes
No
S230
$V_{DCDC_Start} \leq V_{PV} \leq V_{inv_Start}$
Yes
No
S253
PCS power generating DC/DC conv. stopped
S252
PCS power generating DC/DC conv. discharging
S251
PCS power generating DC/DC conv. charging
S232
PCS stopped DC/DC conv. charging
S231
entire system stopped
End

[Figure 3]

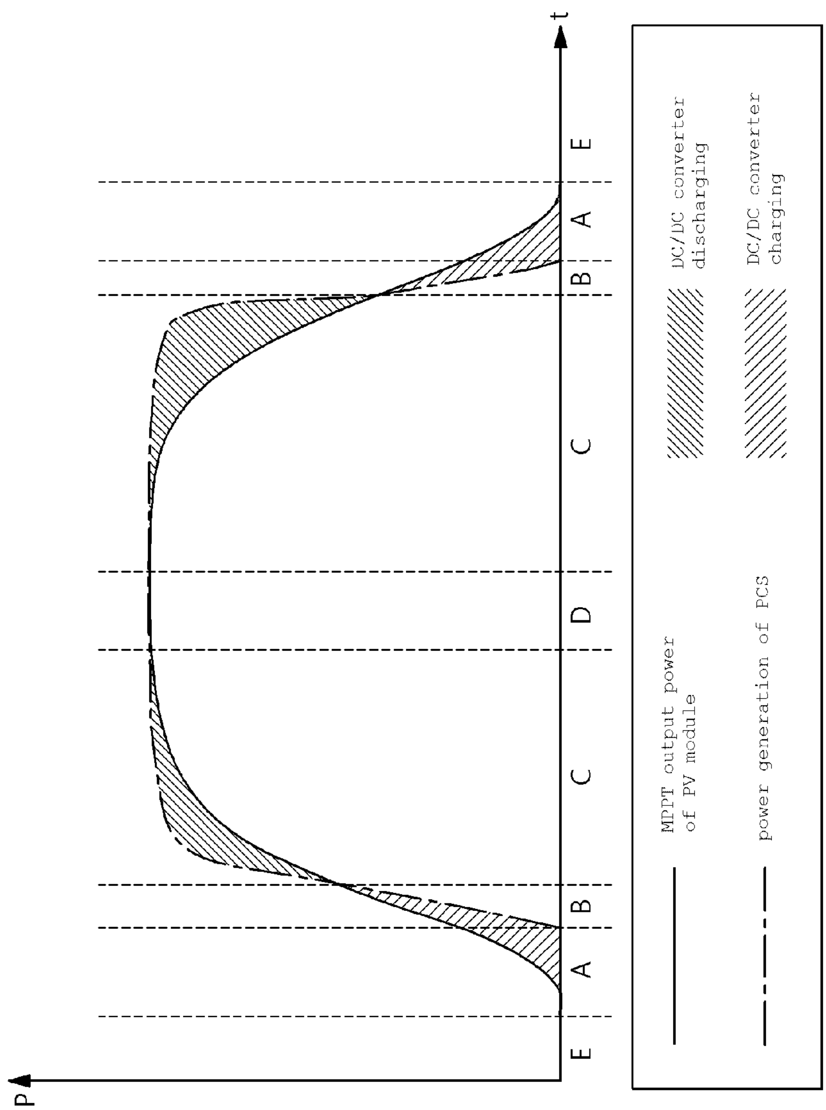
P
t
E
A
B
C
D
C
B
A
E
MPPT output power of PV module
power generation of PCS
DC/DC converter discharging
DC/DC converter charging

[Figure 4]

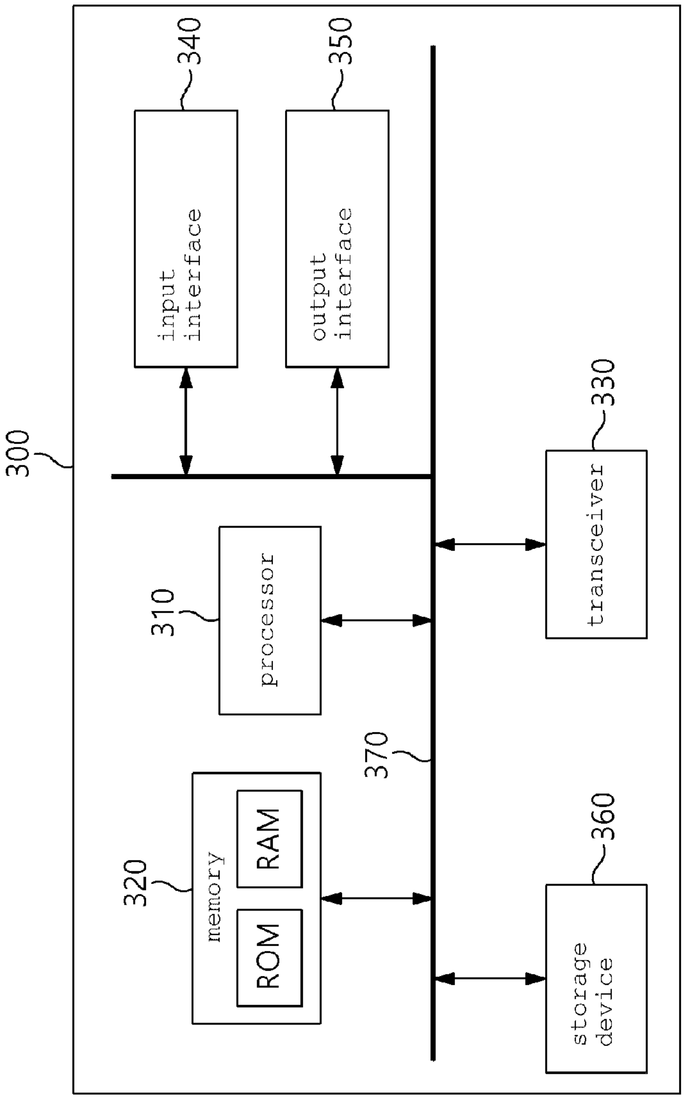
300
340
input interface
350
output interface
310
processor
330
transceiver
320
memory
ROM
RAM
370
360
storage device

# INTERNATIONAL SEARCH REPORT

International application No.
**PCT/KR2022/012470**

## A. CLASSIFICATION OF SUBJECT MATTER

**H02J 3/32**(2006.01)i

According to International Patent Classification (IPC) or to both national classification and IPC

## B. FIELDS SEARCHED

Minimum documentation searched (classification system followed by classification symbols)

H02J 3/32(2006.01); H02J 3/38(2006.01); H02J 3/46(2006.01); H02J 7/00(2006.01); H02J 7/35(2006.01); H02J 9/06(2006.01); H02S 40/32(2014.01); H02S 50/00(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 랙(battery rack), 태양광(photovoltaic), 충전(charging), 전압(voltage), 동작(operation)

## C. DOCUMENTS CONSIDERED TO BE RELEVANT

| Category* | Citation of document, with indication, where appropriate, of the relevant passages | Relevant to claim No. |
|---|---|---|
| X | KR 10-2180879 B1 (URIMTS CO., LTD.) 20 November 2020 (2020-11-20) See paragraphs [0026]-[0048] and [0084]; and figures 1-2. | 1-2,6-7,11-12 |
| Y | | 3-5,8-10,13-15 |
| Y | KR 10-2019087 B1 (DASS TECH CO., LTD.) 06 September 2019 (2019-09-06) See paragraphs [0059]-[0083] and [0115]; and figures 2-6. | 3-5,8-10,13-15 |
| A | KR 10-1128994 B1 (EESYS CO., LTD.) 23 March 2012 (2012-03-23) See paragraphs [0018]-[0025]; and figures 1-2. | 1-15 |
| A | US 2011-0133556 A1 (CHOI, Looney) 09 June 2011 (2011-06-09) See entire document. | 1-15 |
| A | JP 2009-033802 A (FUJI PUREAMU K.K. et al.) 12 February 2009 (2009-02-12) See entire document. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 December 2022** | **20 December 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2022/012470**

| Patent document cited in search report | Publication date (day/month/year) | Patent family member(s) | Publication date (day/month/year) |
|---|---|---|---|
| KR 10-2180879 B1 | 20 November 2020 | None | |
| KR 10-2019087 B1 | 06 September 2019 | None | |
| KR 10-1128994 B1 | 23 March 2012 | KR 10-2010-0119523 A | 09 November 2010 |
| US 2011-0133556 A1 | 09 June 2011 | KR 10-1093956 B1 | 15 December 2011 |
| | | KR 10-2011-0062852 A | 10 June 2011 |
| | | US 8552591 B2 | 08 October 2013 |
| JP 2009-033802 A | 12 February 2009 | JP 4795312 B2 | 19 October 2011 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210140844